(19) **Europäisches Patentamt / European Patent Office / Office européen des brevets**

(11) **EP 4 540 118 B1**

(12) # FASCICULE DE BREVET EUROPEEN

(45) Date de publication et mention de la délivrance du brevet:
**05.08.2026 Bulletin 2026/32**

(21) Numéro de dépôt: **22733145.1**

(22) Date de dépôt: **15.06.2022**

(51) Classification Internationale des Brevets (IPC):
***B60W 30/18*** *(2012.01)*

(52) Classification Coopérative des Brevets (CPC):
**B60W 30/18109; B60W 2555/60; B60W 2720/103**

(86) Numéro de dépôt international:
**PCT/EP2022/066396**

(87) Numéro de publication internationale:
**WO 2023/241797 (21.12.2023 Gazette 2023/51)**

(54) **PROCÉDÉ DE GESTION DE LA VITESSE LONGITUDINALE D'UN VÉHICULE AUTOMOBILE**

VERFAHREN ZUR STEUERUNG DER LÄNGSGESCHWINDIGKEIT EINES KRAFTFAHRZEUGS

METHOD FOR MANAGING THE LONGITUDINAL SPEED OF AN AUTOMOTIVE VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**23.04.2025 Bulletin 2025/17**

(73) Titulaire: **Ampere SAS**
**92100 Boulogne-Billancourt (FR)**

(72) Inventeurs:
• **BENAZIZ, Marouane**
**35510 Cesson-Sevigné (FR)**
• **KVIESKA, Pedro**
**78084 Guyancourt cedex (FR)**

• **SALIOU, Sebastien**
**35000 Rennes (FR)**
• **SIMONIN, Antoine**
**78084 Guyancourt cedex (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
DE-A1- 102014 215 673     US-A1- 2016 121 898
US-A1- 2017 120 892

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé gestion de la vitesse longitudinale d'un véhicule automobile. L'invention porte encore sur un dispositif de gestion de la vitesse longitudinale d'un véhicule automobile. L'invention porte également sur un programme d'ordinateur mettant en œuvre le procédé mentionné. L'invention porte enfin sur un support d'enregistrement sur lequel est enregistré un tel programme.

Des systèmes de gestion automatisée de la vitesse sont couramment installés sur les véhicules actuels, et sont en cours d'évolution pour intégrer de nouvelles fonctionnalités.

Une évolution porte sur la gestion automatisée d'un changement de vitesse à une position précise, par exemple l'arrêt du véhicule automobile au niveau d'un panneau routier, tel qu'un panneau stop, ou au niveau d'un feu tricolore. Cette fonctionnalité nécessite de suivre précisément l'évolution temporelle de la position du véhicule relativement à la position de changement de vitesse, par exemple relativement à la position du panneau routier. De plus, cette fonctionnalité doit mettre en œuvre un profil de vitesse respectant des critères de confort de conduite portant notamment sur l'application de seuils maximaux d'accélération et de jerk.

On connaît du document FR1913267 un procédé permettant d'obtenir un asservissement de position longitudinale du véhicule par rapport au temps, permettant ainsi d'asservir l'instant de passage du véhicule à un endroit précis de la route. Toutefois cette solution présente des inconvénients. Notamment, elle ne permet de garantir le respect de critères de confort de conduite portant sur l'application de seuils maximaux d'accélération et de jerk. Lorsque le véhicule est supposé s'arrêter à un endroit précis, on constate avec les systèmes existants que le positionnement du véhicule n'est pas toujours correct. Par exemple, le véhicule peut s'arrêter trop en amont d'une ligne d'arrêt et devoir ré-accélérer ou interrompre son freinage pour atteindre cette ligne d'arrêt. Au contraire, le véhicule peut générer un freinage brusque et désagréable pour les passagers si une ligne d'arrêt est sur le point d'être franchie.

On connaît par ailleurs du document US8924049B2 un procédé définissant un profil de vitesse en fonction de différents paramètres du trajet, parmi lesquels une vitesse limite associée à chacun des tronçons du trajet. Ce procédé permet de réguler la vitesse du véhicule relativement à une limite de vitesse déterminée par sa position. Toutefois, cette solution présente également des inconvénients, notamment sa précision et sa fiabilité peuvent être améliorées.

De même, US2016121898A1 décrit un autre procédé de gestion de la vitesse longitudinale d'un véhicule automobile.

Le but de l'invention est de fournir un procédé de gestion de la vitesse longitudinale d'un véhicule automobile remédiant aux inconvénients ci-dessus et améliorant les procédés de gestion de la vitesse longitudinale d'un véhicule automobile connus de l'art antérieur. En particulier, l'invention permet de réaliser un procédé qui soit simple et fiable et qui permette la mise en œuvre d'un profil de vitesse confortable et l'application d'un changement de vitesse à une position précise.

A cet effet, l'invention porte sur un procédé de gestion de la vitesse longitudinale d'un véhicule automobile, le véhicule automobile circulant selon une trajectoire planifiée, le véhicule automobile étant équipé d'au moins un moyen de détection de l'environnement du véhicule et d'un moyen d'odométrie.

Le procédé comprend les étapes suivantes :

- une étape de détection, à partir des données issues de l'au moins un moyen de détection, d'un point de changement de vitesse, situé sur la trajectoire donnée et à l'avant du véhicule automobile, et de détermination d'une vitesse limite applicable au point de changement de vitesse, puis
- une deuxième étape de calcul d'une première consigne de vitesse du véhicule automobile, en fonction de la vitesse limite et d'une première distance séparant le véhicule automobile du point de changement de vitesse, la première distance étant calculée en fonction d'un profil de vitesse planifié, la première distance présentant une marge d'erreur en distance par rapport à une deuxième distance déterminée par le moyen d'odométrie entre le véhicule automobile et le point de changement de vitesse, puis
- une troisième étape comprenant une détermination d'une deuxième consigne de vitesse qui compense la marge d'erreur en distance générée dans la deuxième étape et qui anticipe un retard de phase généré dans une quatrième étape de commande du déplacement du véhicule automobile, puis
- une quatrième étape de commande du déplacement du véhicule automobile selon la deuxième consigne de vitesse pour atteindre le point de changement de vitesse avec une vitesse égale à la vitesse limite, la quatrième étape générant le retard de phase entre la réception de la deuxième consigne de vitesse et le déplacement du véhicule selon la deuxième consigne de vitesse.

Le véhicule automobile peut être équipé d'un moyen de mesure de la vitesse instantanée du véhicule, et la quatrième étape peut comprendre la détermination d'une consigne d'accélération du véhicule automobile comme étant la somme d'une première et d'une deuxième composante d'accélération.

La première composante d'accélération peut être calculée par l'application d'un filtre dérivateur du premier degré à la deuxième consigne de vitesse.

La deuxième composante d'accélération peut être obtenue par application d'un premier régulateur proportionnel de gain à la différence entre une vitesse instantanée du véhicule déterminée par le moyen de mesure de la vitesse et une consigne de vitesse filtrée.

La consigne de vitesse filtrée peut être obtenue par l'application successive d'un premier et d'un deuxième filtre du premier ordre à la deuxième consigne de vitesse.

Le premier filtre peut appliquer un retard de phase à la deuxième consigne de vitesse de sorte à synchroniser la deuxième consigne de vitesse avec la première composante d'accélération, et le deuxième filtre peut être paramétré de sorte que la consigne de vitesse filtrée converge vers une valeur stable.

La deuxième consigne de vitesse est la somme d'une première et d'une deuxième composante de vitesse.

La première composante de vitesse peut être obtenue par application d'un premier et d'un deuxième filtre à avance de phase à la première consigne de vitesse, et la deuxième composante de vitesse peut être obtenue par application d'un deuxième régulateur proportionnel comprenant un gain donné à la marge d'erreur en distance, le gain donné étant réglé pour que la deuxième composante de vitesse converge vers une valeur stable.

La même constante de temps peut être utilisée pour définir le premier filtre à avance de phase appliqué pour le calcul de la deuxième consigne de vitesse, le filtre dérivateur du premier degré et le premier filtre à retard de phase appliqués pour le calcul de la consigne d'accélération.

La même constante de temps peut être utilisée pour définir le deuxième filtre à avance de phase appliqué pour le calcul de la deuxième consigne de vitesse, ainsi que le deuxième filtre à retard de phase appliqué pour le calcul de la consigne d'accélération.

Le véhicule peut comprendre une interface homme machine permettant à un usager de définir une quatrième consigne de vitesse et la troisième étape peut comprendre une modification de la deuxième consigne de vitesse comme étant le minimum entre la deuxième consigne de vitesse et la quatrième consigne de vitesse.

Le véhicule peut comprendre un module de suivi de cible déterminant une troisième consigne de vitesse et la troisième étape peut comprendre une modification de la deuxième consigne de vitesse comme étant le minimum entre la deuxième consigne de vitesse, la troisième consigne de vitesse et la quatrième consigne de vitesse.

La vitesse limite peut être nulle.

L'invention porte en outre sur un dispositif de gestion de la vitesse longitudinale d'un véhicule automobile, le véhicule étant équipé d'un contrôleur de couple.

L'invention porte également sur un produit programme d'ordinateur comprenant des instructions de code de programme enregistrées sur un support lisible par ordinateur pour mettre en œuvre les étapes du procédé tel que défini précédemment lorsque ledit programme fonctionne sur un ordinateur. L'invention porte également sur un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en œuvre le procédé tel que défini précédemment.

L'invention porte encore sur un support d'enregistrement de données, lisible par un ordinateur, sur lequel est enregistré un programme d'ordinateur comprenant des instructions de code de programme de mise en œuvre du procédé tel que défini précédemment. L'invention porte encore sur un support d'enregistrement lisible par ordinateur comprenant des instructions qui, lorsqu'elles sont exécutées par un ordinateur, conduisent celui-ci à mettre en œuvre le procédé tel que défini précédemment.

L'invention porte encore sur un signal d'un support de données, portant le produit programme d'ordinateur tel que défini précédemment.

Le dessin annexé représente, à titre d'exemple, un mode de réalisation d'un dispositif de gestion de la vitesse longitudinale d'un véhicule automobile selon l'invention et un mode d'exécution d'un procédé de gestion de la vitesse longitudinale d'un véhicule automobile selon l'invention.

[Fig. 1] La figure 1 représente un véhicule automobile équipé d'un dispositif de gestion de la vitesse longitudinale d'un véhicule automobile.

[Fig. 2] La figure 2 est un ordinogramme d'un mode d'exécution d'un procédé de gestion de la vitesse longitudinale d'un véhicule automobile.

[Fig. 3] La figure 3 représente schématiquement les traitements effectués dans les étapes E2 à E4 du procédé de gestion de la vitesse longitudinale d'un véhicule automobile.

[Fig. 4] La figure 4 illustre l'effet de la mise en œuvre du procédé de gestion de la vitesse longitudinale d'un véhicule automobile.

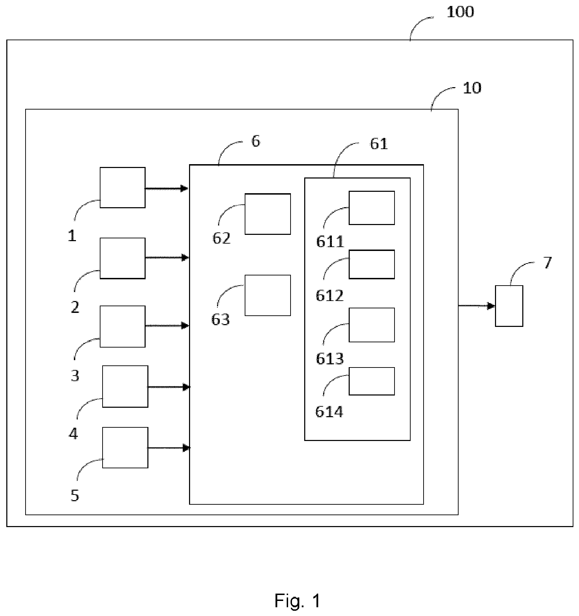

Un exemple d'un véhicule automobile 100 équipé d'un mode de réalisation d'un dispositif de gestion de la vitesse longitudinale d'un véhicule autonome est décrit ci-après en référence à la figure 1.

Le véhicule automobile 100 peut être un véhicule automobile de n'importe quel type, notamment un véhicule de tourisme, un véhicule utilitaire, un camion ou encore un véhicule de transport en commun tel qu'un bus ou une navette. Selon le mode de réalisation décrit, le véhicule automobile 100 est un véhicule autonome et sera désigné "véhicule autonome" dans la suite de la description.

Cette illustration est donc faite à titre non limitatif. Notamment le véhicule automobile pourrait être un véhicule non autonome, équipé d'un système d'aide à la conduite, notamment un système d'aide à la conduite correspondant à un niveau supérieur ou égal au niveau 2 d'autonomie., c'est-à-dire correspondant à une autonomie partielle du véhicule.

On suppose que le véhicule autonome 100 se déplace sur une trajectoire planifiée T passant par un point de changement de vitesse P situé à l'avant du véhicule autonome.

Dans la suite du document, le terme « point de changement de vitesse » est utilisé pour désigner un élément de l'infrastructure routière déterminant une vitesse limite à la position de cet élément d'infrastructure routière, ou à partir de la position de cet élément d'infrastructure routière. Selon le type de point de changement de vitesse, la vitesse limite peut être une vitesse maximale. C'est le cas, par exemple, si le point de changement de vitesse est une signalétique de limitation de vitesse, ou une signalétique de céder le passage.

Le point de changement de vitesse peut également être un panneau signalétique (par exemple un panneau stop) ou un feu tricolore pouvant commander l'arrêt du véhicule autonome au point de changement de vitesse.

S'il existe plusieurs panneaux signalétiques ou feux sur l'itinéraire considéré, le point de changement de vitesse est celui que le véhicule autonome atteindra en premier.

Le dispositif de gestion de la vitesse longitudinale concerne plus particulièrement des points de changement de vitesse qui impliquent une réduction de la vitesse, voire un arrêt du véhicule autonome. En effet, dans le cas d'un point de changement de vitesse impliquant une réduction de la vitesse ou plus particulièrement un arrêt, le respect de la position du point de changement de vitesse peut être primordial. Dans un mode de réalisation, le dispositif de gestion de la vitesse longitudinale pourrait prendre en compte uniquement des points de changement de vitesse impliquant un arrêt du véhicule autonome, ou une réduction de la vitesse en dessous d'un seuil donné.

Le terme « position de changement de vitesse » désigne la position du point de changement de vitesse.

Le véhicule autonome 100 comprend un système de gestion 10 et un contrôleur de couple 7. Le contrôleur de couple 7 reçoit des consignes d'accélération générées par le système de gestion 10. Afin de mettre en œuvre un déplacement longitudinal du véhicule autonome 100, le contrôleur de couple 7 transforme chaque consigne d'accélération en une première consigne de couple destinée à un groupe motopropulseur du véhicule et/ou une deuxième consigne de couple destinée à un actionneur de freins du véhicule.

Le système de gestion 10 comprend principalement les éléments suivants :

- au moins un moyen de détection 1,
- un moyen d'odométrie 2,
- un moyen de mesure de la vitesse instantanée du véhicule autonome 3, ou capteur de vitesse 3,
- un module de suivi de cible 4,
- une interface homme-machine 5
- et une unité de calcul 6 comprenant un microprocesseur 61, une mémoire électronique 62 et des interfaces de communication 63 permettant au microprocesseur 61 de communiquer avec le moyen de détection 1, le moyen d'odométrie 2, le moyen de mesure de la vitesse instantanée 3, le module de suivi de cible 4, et l'interface homme-machine 5.

Le moyen de détection 1 peut comprendre un moyen de localisation GPS du véhicule autonome 100 sur une carte de définition standard, ou sur une carte haute définition. Dans ce mode de réalisation, la portée du moyen de détection 1 est de l'ordre de plusieurs centaines de mètres et sa précision est déterminée par la précision de la localisation GPS qui est de l'ordre de quelques mètres.

A partir de la cartographie et des données issues du GPS, le moyen de détection 1 est apte à détecter un point de changement de vitesse se situant sur la trajectoire planifiée T du véhicule autonome 100, à partir d'une position courante du véhicule autonome 100. Les données issues du moyen de détection 1 permettent ainsi de déterminer la position de changement de vitesse.

Avantageusement, le moyen de détection 1 peut comprendre en outre un équipement dont la précision est supérieure à celle de la localisation GPS. Cet équipement peut être par exemple une caméra frontale et/ou un lidar. Dans ce mode de réalisation, les images issues de la caméra frontale et/ou du lidar permettent de détecter la position de changement de vitesse avec une précision de l'ordre de la dizaine de centimètres.

Le moyen d'odométrie 2 évalue une distance DP parcourue par le véhicule à partir d'un point donné, par exemple à partir d'un point de départ d'un itinéraire. Dans un mode de réalisation, la distance parcourue DP peut être obtenue par intégration de la vitesse du véhicule autonome 100. Dans un mode de réalisation alternatif, le moyen d'odométrie 2 pourrait comprendre un moyen de positionnement à haute précision du véhicule autonome sur une carte, par exemple par l'utilisation d'un capteur GPS ; à partir du positionnement du véhicule, le moyen d'odométrie pourrait calculer la distance parcourue DP.

La distance parcourue DP est ensuite utilisée pour estimer la distance curviligne DM séparant le véhicule autonome 100 du point de changement de vitesse P.

Le capteur de vitesse 3 fournit à tout instant la vitesse instantanée du véhicule autonome 100. Le capteur de vitesse 3 peut comprendre, par exemple, des capteurs de rotation des roues du véhicule autonome 100.

Le système de gestion 10 détermine une première et une deuxième consigne de vitesse CV1, CV2 qui seront décrites plus loin dans ce document.

Le module de suivi de cible 4 détermine une troisième consigne de vitesse CV3 permettant de maintenir une distance de suivi entre le véhicule autonome 100 et un ou plusieurs véhicules environnants. Dans un mode de réalisation préférentiel, l'au moins une cible est détectée dans le trafic se situant à l'avant du véhicule autonome 100. Dans ce mode de réalisation l'au moins une cible peut se situer sur la voie de circulation du véhicule autonome, par exemple l'au moins une cible peut comprendre un premier véhicule situé devant le véhicule autonome et dans sa voie de circulation, ainsi qu'un deuxième véhicule situé devant le premier véhicule cible et dans la même voie de circulation. En complément, lorsque le véhicule autonome circule sur une route à plusieurs voies de circulation dans le même sens, l'au moins une cible peut également comprendre un ou plusieurs véhicules présentant un risque d'insertion sur la voie du véhicule autonome 100. Les véhicules à risque d'insertion sont détectés sur la ou les voies adjacentes à la voie de circulation du véhicule autonome 100 dans le trafic situé en amont du véhicule autonome 100. Ils se situent à l'avant du véhicule autonome 100, ce qui peut inclure les situations où un véhicule est dans une manœuvre de dépassement du véhicule autonome 100 ou inversement. Autrement dit, un véhicule peut être détecté comme étant à risque d'insertion lorsqu'il roule en parallèle avec le véhicule autonome 100. Lorsqu'aucune cible n'est détectée dans l'environnement du véhicule autonome 100, la troisième consigne de vitesse CV3 est indéfinie.

L'interface homme-machine 5 permet à un usager du véhicule autonome 100 de déterminer une quatrième consigne de vitesse CV4. L'interface homme-machine 5 peut, par exemple, être un écran de saisie présent sur le tableau de bord du véhicule autonome 100. Dans un mode de réalisation préférentiel (décrit dans la suite du document), la quatrième consigne de vitesse CV4 est toujours définie. Dans un mode de réalisation alternatif non décrit, la quatrième consigne de vitesse pourrait ne pas être définie.

Dans un mode de réalisation, le microprocesseur 61 permet d'exécuter un logiciel comprenant les modules suivants, qui collaborent entre eux :
un module 611 de détection d'un point de changement de vitesse et de détermination d'une vitesse limite applicable au point de changement de vitesse, qui collabore avec l'au moins un moyen de détection 1, ,

- un module 612 de calcul d'une première consigne de vitesse CV1,
- un module 613 de détermination d'une deuxième consigne de vitesse CV2, qui collabore avec le moyen d'odométrie 2, le module de suivi de cible 4 et l'interface homme-machine 5, la détermination de la deuxième consigne de vitesse CV2 prenant en compte les deuxième et troisième consignes de vitesse CV3, CV4 selon une stratégie d'arbitrage décrite plus loin dans ce document,
- un module 614 de commande du déplacement du véhicule autonome selon la deuxième consigne de vitesse CV2, qui collabore avec le capteur de vitesse 3.

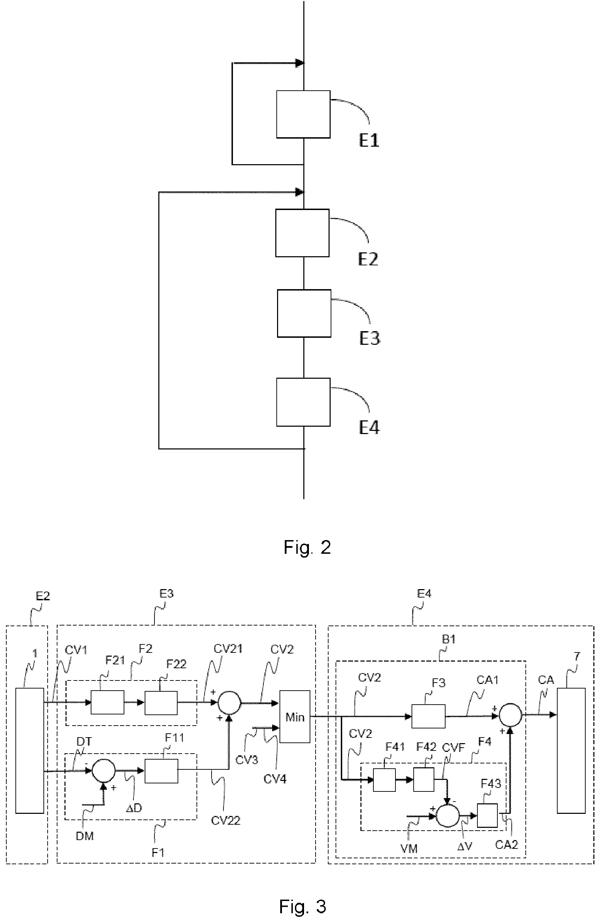

Un mode d'exécution du procédé de gestion de la vitesse d'un véhicule autonome est décrit ci-après en référence à la figure 2. Le procédé comprend quatre étapes E1 à E4.

Dans l'étape E1, on détecte, à partir des données issues de l'au moins un moyen de détection 1, un point de changement de vitesse P, situé sur la trajectoire planifiée T du véhicule autonome 100 et à l'avant du véhicule autonome, et on détermine une vitesse limite VL applicable au point de changement de vitesse P.

Pour cela, les données issues du ou des moyens de détection 1 sont comparées à la trajectoire planifiée T.

Par exemple, dans un mode de réalisation où le moyen de détection 1 est réalisé par une localisation GPS du véhicule autonome sur une cartographie, on combine les informations de planification de trajectoire, de position du véhicule et de cartographie, pour rechercher la présence d'un point de changement de vitesse P sur la portion d'itinéraire située à l'avant du véhicule autonome 100 et dans la portée du premier moyen de détection 1.

A un instant T0, on détecte ainsi au moins une signalétique de limitation de vitesse ou d'arrêt sur cette portion d'itinéraire. Si plusieurs signalétiques sont détectées sur cette portion d'itinéraire, la signalétique la plus proche du véhicule autonome 100 sera détectée comme étant le point de changement de vitesse P.

Les données de cartographie permettent d'associer une vitesse limite VL au point de changement de vitesse P. Par exemple, si le point de changement de vitesse P est déterminé par un panneau de limitation de vitesse, la vitesse VL est la vitesse inscrite sur le panneau de limitation de vitesse. Un point de changement de vitesse peut également être déterminé par un changement de type de voie, par exemple la fin d'un tronçon de voie rapide ou d'un tronçon d'autoroute, qui débouche sur un type de voie différent, par exemple un tronçon de route nationale ou départementale. La vitesse VL est alors déterminée par la réglementation définie sur ledit type de voie différent. Un point de changement de vitesse P peut encore être déterminé par un panneau stop et dans ce cas la vitesse limite VL est nulle. Dans d'autres situations où le point de changement de vitesse P correspond à un carrefour sur lequel le véhicule autonome 100 n'est pas prioritaire, par exemple un rond-point ou un carrefour avec feu tricolore, la vitesse VL peut être proche de zéro.

Puis, suite à l'étape E1, on itère, sur les étapes E2 à E4 jusqu'à ce que le véhicule autonome 100 atteigne le point de changement de vitesse P.

Les étapes E2 à E4 sont décrites ci-après en référence à la figure 3.

Dans la deuxième étape E2, on calcule une première consigne de vitesse CV1 du véhicule autonome 100, en fonction de la vitesse limite VL et d'une première distance DT, planifiée en fonction du temps, séparant le véhicule autonome 100 du point de changement de vitesse P.

La première distance DT est une distance théorique, c'est-à-dire qu'elle sera calculée lors de chaque itération de l'étape E2 en fonction d'un profil de vitesse prédictif PVP décrit ci-après. Dans la suite du document, la première distance DT est nommée « distance théorique DT ».

Lors de la première itération de l'étape E2, c'est-à-dire à l'instant T0, la distance théorique DT est égale à la distance curviligne initiale D0 calculée entre la position du véhicule autonome 100 à l'instant T0 et la position du point de changement de vitesse P.

Lors de la première itération de l'étape E2, on calcule un profil de vitesse prédictif PVP sur la portion d'itinéraire reliant la position à l'instant T0 du véhicule autonome 100 à la position du point de changement de vitesse P.

Dans la suite du document, le terme « profil de vitesse » désigne des courbes d'évolution temporelle de la vitesse longitudinale, de l'accélération longitudinale et du jerk longitudinal du véhicule autonome 100, le jerk longitudinal étant la dérivée de l'accélération longitudinale du véhicule autonome 100.

Le profil de vitesse prédictif PVP est calculé de sorte que le véhicule autonome 100 circule à la vitesse VL lorsqu'il atteint le point de changement de vitesse P.

En outre, le profil de vitesse prédictif PVP est calculé de sorte à permettre au véhicule autonome 100 de se déplacer sur l'itinéraire T, entre sa position à l'instant T0 et le point de changement de vitesse P, et selon des critères de confort requis pour les usagers du véhicule. Les critères de confort peuvent comprendre le respect de seuils maximaux d'accélération et de jerk.

Ainsi, on détermine à l'instant T0 le profil de vitesse prédictif PVP du véhicule autonome 100 à partir de sa position à l'instant T0 et jusqu'à son arrivée au point de changement de vitesse P. Notamment, le profil de vitesse comprend une courbe d'évolution temporelle théorique VT(t) du véhicule autonome 100.

Lors des itérations suivantes de l'étape E2, on considère que le véhicule autonome 100 se déplace selon le profil de vitesse prédictif PVP établi à l'instant T0. On peut donc à chaque instant t d'itération sur l'étape E2 calculer

- une première consigne de vitesse CV1=VT(t), et
- une distance théorique DT(t) entre le véhicule autonome et le point de changement de vitesse P, DT(t) évoluant selon une courbe décroissante entre la valeur D0 à T0 et la valeur 0 à l'instant d'arrivée au point de changement de vitesse P.

La distance théorique DT(t) entre le véhicule autonome et le point de changement de vitesse P est calculée selon la formule suivante :

$$[Math1]$$

$$DT(t) = D0 - DPT(t)$$

où

- D0 est la distance calculée à l'instant T0 entre le véhicule autonome 100 et le point de changement de vitesse P,
- DPT(t) est la distance qui a été théoriquement parcourue par véhicule autonome 100 se déplaçant selon le profil de vitesse prédictif PVP entre les instants T0 et t.

La première distance DT ainsi calculée étant théorique, elle présente une marge d'erreur en distance $\Delta D$ par rapport à une deuxième distance DM déterminée par le moyen d'odométrie 2 entre le véhicule autonome 100 et le point de changement de vitesse P.

On enchaine ensuite sur l'étape E3. La troisième étape E3 comprend une détermination d'une deuxième consigne de vitesse CV2 qui compense la marge d'erreur en distance $\Delta D$ générée dans la deuxième étape E2 et qui anticipe un retard $\Delta T$ généré dans la quatrième étape E4 de commande du déplacement du véhicule autonome 100.

L'étape E3 comprend une détermination à l'instant t d'une distance estimée DM(t) entre le véhicule autonome et le point de changement de vitesse P, à partir des données issues du moyen d'odométrie 2.

Le moyen d'odométrie 2 évalue une distance DP(t) parcourue par le véhicule entre l'instant T0 de détection du point de changement de vitesse et l'instant t. Notamment, la distance DP(t) peut être obtenue par intégration de la vitesse du véhicule autonome 100 entre les instants T0 et t. La distance estimée DM(t) entre le véhicule autonome 100 et le point de changement de vitesse P est alors égale à la différence entre la distance initiale D0 et la distance parcourue DP(t).

Alternativement la distance DM(t) pourrait être estimée à partir des images issues d'une caméra frontale, lorsque le point de changement de vitesse P entre dans la zone de détection de la caméra frontale.

L'étape E3 comprend en outre le calcul, à l'instant t, d'une deuxième consigne de vitesse CV2(t) à partir de la première consigne de vitesse CV1(t) et de la différence entre la distance théorique DT(t) et la distance estimée DM(t).

Le calcul de la deuxième consigne de vitesse CV2(t) est défini pour compenser deux facteurs induisant une imprécision dans l'évolution temporelle de la position du véhicule autonome 100 le long de sa trajectoire T :

- un premier facteur d'imprécision est lié à un écart entre la distance théorique DT(t) calculée selon la formule Math1 et la distance réelle séparant, à l'instant t, le véhicule autonome 100 du point de changement de vitesse P,
- un deuxième facteur d'imprécision est lié à un retard de phase $\Delta T$ induit par une boucle d'asservissement entre la vitesse et l'accélération, cette boucle étant mise en œuvre dans l'étape suivante du traitement, c'est-à-dire dans l'étape E4.

Pour compenser ces facteurs d'imprécision, dans l'étape E3 on met en œuvre deux corrections F1 et F2, corrigeant respectivement le premier et le deuxième facteur d'imprécision,

- la première correction F1 est une boucle de régulation de distance, prenant en entrée la différence $\Delta D(t)$ entre la distance théorique DT(t) et la distance estimée DM(t),
- la deuxième correction F2 comprend deux filtres à avance de phase appliqués entre la première consigne de vitesse CV1 et la deuxième consigne de vitesse CV2.

La première correction F1 a pour but de corriger la première consigne de vitesse CV1(t) proportionnellement à un écart de distance $\Delta D(t)$ mesuré par rapport au profil de vitesse prédictif PVP. Pour cela, la première correction F1 applique un régulateur proportionnel F11 comprenant un gain donné $K_D$, notamment un gain multiplicatif $K_D$, à l'écart $\Delta D(t)$ entre la distance théorique DT(t) calculée selon la formule Math1, et la distance estimée DM(t) entre le véhicule autonome et le point de changement de vitesse P. Le gain $K_D$ est homogène à l'inverse d'une seconde ($s^{-1}$) ; il permet de régler la dynamique de cette correction. Dans un mode de réalisation, il est déterminé de manière empirique pour satisfaire un compromis entre stabilité et précision du suivi de consigne.

La deuxième correction F2 a pour but de compenser le retard $\Delta T$ lié aux filtres mis en œuvre dans l'étape ultérieure E4, notamment dans une boucle d'asservissement B1 entre la deuxième consigne de vitesse CV2 et une consigne d'accélération CA. La deuxième correction F2 est donc déterminée par le mode de réalisation de la boucle d'asservissement B1 que nous décrivons plus loin dans ce document. La deuxième correction F2 sera décrite plus loin, suite à la description de la boucle d'asservissement B1.

Ainsi, la deuxième consigne de vitesse CV2 est la somme d'une première et d'une deuxième composante de vitesse CV21, CV22,

- la première composante de vitesse CV21 étant obtenue par application de deux filtres à avance de phase à la première consigne de vitesse CV1, et
- la deuxième composante de vitesse CV22 étant obtenue par application d'un gain $K_D$ à la marge d'erreur en distance $\Delta D$.

En remarque, le gain $K_D$ est réglé de sorte que la deuxième composante de vitesse CV22 converge vers une valeur stable.

Dans un mode de réalisation de l'étape E3, l'étape E3 peut comprendre en outre le traitement d'une troisième consigne de vitesse CV3 déterminée par le module de suivi de cible 4.

Cette situation se produit lorsque l'étape E1 s'exécute à un moment où aucune cible n'est détectée par le module de suivi de cible 4, puis une cible est détectée pendant la mise en œuvre, dans les E2 à E4, de la régulation de la vitesse du véhicule autonome par rapport à la distance du véhicule au point de changement de vitesse P.

Au moment où une cible est détectée, une troisième consigne de vitesse CV3 est calculée par le module de suivi de cible 4 pour maintenir une distance de suivi donnée entre le véhicule autonome 100 et ladite cible.

La cible est préférentiellement détectée dans le trafic situé à l'avant du véhicule autonome 100. Dans ce cas, il est nécessaire que la consigne de vitesse appliquée par véhicule autonome 100 soit inférieure à la consigne de vitesse CV3, afin que le véhicule autonome 100 respecte la distance de suivi donnée avec la cible.

De ce fait, pour des raisons de sécurité, une stratégie d'arbitrage est appliquée entre les deux consignes de vitesse, CV2 et CV3. Selon cette stratégie, la deuxième consigne de vitesse CV2 doit être bornée à la troisième consigne de vitesse CV3.

Autrement dit, la valeur de la deuxième consigne de vitesse CV2 est actualisée comme étant le minimum entre la deuxième consigne de vitesse CV2 et la troisième consigne de vitesse CV3.

Dans un mode de réalisation alternatif ou complémentaire de l'étape E3, l'étape E3 peut comprendre en outre le traitement d'une quatrième consigne de vitesse CV4 définie par l'usager du véhicule via l'interface homme-machine.

Une stratégie d'arbitrage est donc appliquée entre les deux consignes de vitesse, CV2 et CV4. Selon cette stratégie, la deuxième consigne de vitesse CV2 doit être bornée à la quatrième consigne de vitesse CV4. Si une troisième consigne de vitesse CV3 est définie, la deuxième consigne de vitesse CV2 doit également être bornée à la troisième consigne de vitesse CV3.

Autrement dit, la valeur de la deuxième consigne de vitesse CV2 est actualisée comme étant

- le minimum entre la deuxième consigne de vitesse CV2, la quatrième consigne de vitesse CV4 et la troisième consigne de vitesse CV3, si la troisième consigne CV3 est définie,
  sinon
- le minimum entre la deuxième consigne de vitesse CV2 et la quatrième consigne de vitesse CV4 .

On enchaine ensuite sur l'étape E4. Dans un mode de réalisation de l'étape E4 représenté par la figure 2, on met en œuvre une boucle d'asservissement B1 entre la deuxième consigne de vitesse CV2 calculée dans l'étape E3 et une consigne d'accélération CA.

Par exemple, la boucle d'asservissement B1 peut mettre en œuvre une régulation de vitesse générant deux composantes d'accélération CA1, CA2 :

- une première composante d'accélération CA1 de type FeedForward est obtenue par application d'un filtre dérivateur du premier ordre F3 à la deuxième consigne de vitesse CV2,
- une deuxième composante d'accélération CA2 de type Feedback est obtenue par application d'un régulateur proportionnel de gain F43 à une erreur de vitesse $\Delta V$, calculée entre une vitesse mesurée VM du véhicule automobile 100 et une consigne de vitesse filtrée CVF,
- la consigne d'accélération CA étant la somme des première et deuxième composantes d'accélération, CA1, CA2.

Le régulateur proportionnel F43 applique un gain multiplicatif Kv à l'erreur de vitesse $\Delta V$. Le gain Kv est homogène à l'inverse d'une seconde ($s^{-1}$) ; il permet de régler la dynamique de cette correction. Dans un mode de réalisation, il est déterminé de manière empirique pour satisfaire un compromis entre stabilité, rapidité et confort de suivi de consigne. Notamment, le gain Kv est défini pour que la deuxième composante d'accélération CA2 converge vers une valeur stable.

La consigne de vitesse filtrée CVF est obtenue par application de deux filtres successifs du premier ordre F41, F42 à la deuxième consigne de vitesse CV2. Le premier filtre F41 a pour but de synchroniser la deuxième consigne de vitesse CV2 avec la première composante d'accélération CA1 de type FeedForward. Le deuxième filtre F42 a pour but de prendre en compte la dynamique du système.

Les fonctions de transfert respectives H3, H41, H42 des filtres F3, F41, F42 s'expriment respectivement selon les formules Math 2.

[Math 2]

$$H3 = \frac{s}{1 + \tau_{FF}s}$$

$$H41 = \frac{1}{1 + \tau_{FF}s}$$

$$H42 = \frac{1}{1 + \tau_{ModFF}s}$$

où

- s est la variable de Laplace homogène à l'inverse d'une seconde ($s^{-1}$),
- $\tau_{FF}$ est une première constante de temps, dont la valeur est de l'ordre du plusieurs dixièmes de secondes, par exemple 0,4 secondes, et
- $\tau_{ModFF}$ est une deuxième constante de temps, dont la valeur est de l'ordre du dixième de secondes, par exemple 0,15 secondes.

La valeur relativement élevée de la première constante de temps $\tau_{FF}$ présente l'intérêt de filtrer d'éventuelles variations brutales dans l'évolution de la consigne de vitesse, et ainsi d'améliorer le confort des usagers. Lesdites variations brutales sont notamment dues à une discontinuité de la dérivée de l'évolution temporelle de la consigne de vitesse,

Néanmoins, la valeur élevée de $\tau_{FF}$ entraine un délai non négligeable entre le calcul de la consigne de vitesse du véhicule autonome 100 et la mise en œuvre de cette consigne de vitesse par le groupe motopropulseur et/ou l'actionneur de freins.

Comme cela a été précédemment expliqué, dans l'étape E3 on applique une deuxième correction F2 afin que le délai introduit par la boucle B1 ne pénalise pas la capacité du véhicule autonome 100 à atteindre un point précis de son itinéraire à une vitesse donnée.

La deuxième correction F2 comprend

- un premier filtre à avance de phase F21 qui compense par anticipation le retard qui est introduit par le filtre F41 et,
- un deuxième filtre à avance de phase F22 qui compense par anticipation le retard qui est introduit par le filtre F42.

Les fonctions de transfert respectives H21 et H22 des filtres F21 et F22 s'expriment respectivement selon les formules Math 3.

[Math 3]

$$H21 = \frac{1 + \tau_{FF}s}{1 + \tau_f s}$$

$$H22 = \frac{1 + \tau_{ModFF}s}{1 + \tau_f s}$$

où

- s est la variable de Laplace homogène à l'inverse d'une seconde (s$^{-1}$),
- $\tau_{FF}$ est la première constante de temps également utilisée dans le filtre à retard de phase F41,
- $\tau_{ModFF}$ est la deuxième constante de temps également utilisée dans le filtre à retard de phase F42.
- $\tau_f$ est une troisième constante de temps dont la valeur est de l'ordre de 50 millisecondes

Les filtres F21 et F22 étant ainsi définis, le retard de phase entre la première consigne de vitesse CV1 et la consigne d'accélération CA se limite au retard induit par la troisième constante de temps. Ce retard est donc minimisé, puisqu'il est de l'ordre de 50 millisecondes.

La consigne d'accélération CA ainsi déterminée est transmise au contrôleur de couple 7 afin de mettre en œuvre un déplacement longitudinal du véhicule autonome 100.

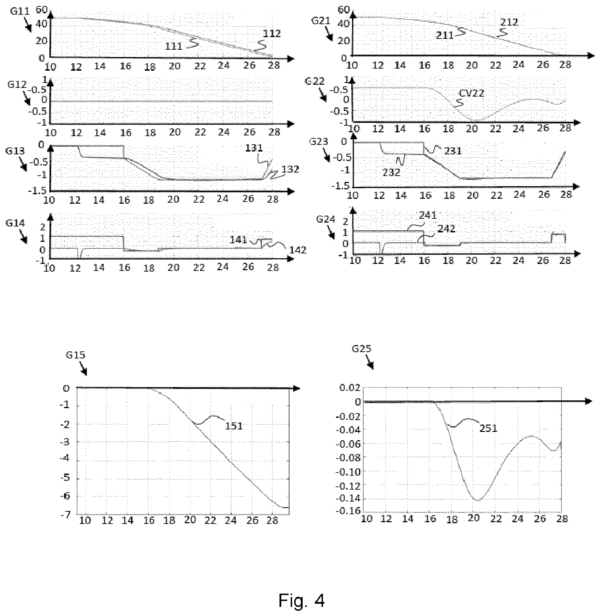

La figure 4 illustre l'effet de la mise en œuvre de l'invention :

- les graphes G11, G12, G13, G14 et G15 illustrent le déplacement du véhicule autonome vers un point de changement de vitesse P sans mise en œuvre de l'invention, et
- les graphes G21, G22, G23, G24 et G25 illustrent le déplacement du véhicule autonome vers un point de changement de vitesse P avec mise en œuvre de l'invention.

L'axe des abscisses des graphes G11 à G15 et des graphes G21 à G25 représente le temps en secondes.

Les graphes G11 et G21 permettent de comparer l'évolution temporelle de la vitesse (représentée en km/h sur l'axe des ordonnées des graphes G11 et G21) du véhicule autonome respectivement sans et avec mise en œuvre de l'invention :

- sur le graphe G11, sans mise en œuvre de l'invention, la vitesse appliquée 112 est en retard sur la consigne de vitesse 111 issue du profil de vitesse prédictif PVP,
- sur le graphe G21, avec mise en œuvre de l'invention, la vitesse appliquée 212 est sensiblement plus proche la consigne de vitesse 211 issue du profil de vitesse prédictif PVP.

Les graphes G12 et G22 permettent de comparer l'évolution temporelle d'une composante de la consigne de vitesse (représentée en m/s sur l'axe des ordonnées des graphes G12 et G22) correspondant à une correction en distance respectivement sans et avec mise en œuvre de l'invention :

- sur le graphe G12, cette composante est nulle puisque, sans mise en œuvre de l'invention, aucune correction de vitesse n'est appliquée,
- sur le graphe G22, avec mise en œuvre de l'invention, cette composante CV22 évolue entre 0 m/s et -0,15 m/s.

Les graphes G13 et G23 permettent de comparer l'évolution temporelle de l'accélération du véhicule autonome (représentée en m/s$^2$ sur l'axe des ordonnées des graphes G13 et G23) respectivement sans et avec mise en œuvre de l'invention :

- sur le graphe G13, sans mise en œuvre de l'invention, entre les instants t=16s et t=28s on observe un écart important entre l'accélération 132 appliquée par le véhicule et la consigne d'accélération 131 issue du profil de vitesse prédictif PVP,
- sur le graphe G23, avec mise en œuvre de l'invention, entre les instants t=16s et t=28s on observe une réduction de l'écart entre l'accélération 232 appliquée par le véhicule et la consigne d'accélération 231 issue du profil de vitesse prédictif PVP.

De même, les graphes G14 et G24 permettent de comparer l'évolution temporelle du jerk du véhicule autonome (représentée en m/s$^3$ sur l'axe des ordonnées des graphes G14 et G24) respectivement sans et avec mise en œuvre de l'invention :

- sur le graphe G14, sans mise en œuvre de l'invention, à l'instant t=28s on observe un écart important entre le jerk 142 appliqué par le véhicule et le jerk 141 déterminé par le profil de vitesse prédictif PVP,
- sur le graphe G24, avec mise en œuvre de l'invention, l'écart observé à l'instant t=28s entre le jerk 242 appliqué par le véhicule et le jerk 241 déterminé par le profil de vitesse prédictif PVP est considérablement réduit.

De plus, les graphes G15 et G25 permettent de comparer l'évolution temporelle, respectivement sans et avec mise en œuvre de l'invention, d'une erreur de distance (représentée en mètres sur l'axe des ordonnées des graphes G15 et G25) mesurée à un instant donné entre la position réelle du véhicule autonome et la position théorique déterminée par le profil de vitesse prédictif PVP :

- sur le graphe G15, sans mise en œuvre de l'invention, l'erreur de distance 151 augmente significativement au fil du temps jusqu'à dépasser 6 mètres,
- sur le graphe G25, avec mise en œuvre de l'invention, l'erreur de distance 251 reste inférieure à quinze centimètres sur toute la durée du trajet et se stabilise autour de 6 centimètres à l'approche du point de changement de vitesse P.

Grâce à l'invention, les vitesses, accélérations et jerks mis en œuvre par le véhicule autonome 100 restent proches des valeurs définies par le profil de vitesse prédictif PVP durant le déplacement du véhicule vers le point de changement de vitesse P. Les corrections de phase et de distance apportées par l'invention permettent au véhicule autonome 100, en premier lieu, de se déplacer sur son itinéraire en minimisant la distance entre sa position réelle et une position théorique déterminée par un déplacement selon son profil PSP, et ainsi d'assurer notamment le confort des usagers du véhicule et

- en deuxième lieu d'atteindre le point de changement de vitesse P avec une vitesse proche de la vitesse limite VL, et avec une précision de l'ordre d'une dizaine ou de quelques dizaines de centimètres relativement à la position du point de changement de vitesse P, et ainsi d'assurer la précision d'arrêt ou de changement de vitesse.

Une particularité de l'invention est de réguler, non seulement la vitesse du véhicule autonome par rapport au temps, mais aussi la distance entre le véhicule autonome et le point de changement de vitesse par rapport au temps. Ainsi, la régulation de la distance entre le véhicule autonome et le point de changement de vitesse permet de corriger une éventuelle déviation de position liée à une déviation de la vitesse du véhicule par rapport à la consigne. Ce point différencie notamment l'invention du brevet US8924049B2 cité dans l'état de l'art antérieur.

En outre, on applique une stratégie de commutation entre une régulation de la vitesse du véhicule autonome selon l'invention, et une régulation de la vitesse du véhicule autonome selon le module de suivi de cible 4. En effet, les besoins en termes de précision de la régulation de vitesse sont très différents selon que l'on cherche à maintenir une distance de suivi entre un véhicule cible et le véhicule autonome 100, ou que l'on cherche à atteindre précisément une position de changement de vitesse du véhicule autonome, notamment une position d'arrêt du véhicule autonome. Dans le cas d'un suivi de cible, la vitesse du véhicule autonome est régulée par rapport à la vitesse de la cible afin de maintenir une distance de suivi correspondant à un temps minimal, par exemple 2 secondes, séparant les deux véhicules. Par exemple, si l'on considère que le véhicule circule à 90 km/h, une distance de suivi équivalente à 2 secondes de séparation est de 50 mètres. La distance réellement maintenue entre le véhicule autonome et la cible peut alors osciller entre 45 et 55 mètres sans que cela n'ait d'impact sur la sécurité. En revanche, dans le cas d'une régulation de vitesse en fonction d'une position de changement de vitesse du véhicule autonome, et plus particulièrement en fonction d'une position d'arrêt du véhicule autonome, la précision attendue sur la position du véhicule relativement au point de changement de vitesse P est de l'ordre de la dizaine de centimètres. De même, la vitesse de suivi d'une cible peut osciller faiblement autour d'une consigne de vitesse de suivi sans que cela n'impacte le maintien d'une distance de sécurité entre les deux véhicules. En revanche, dans le cas d'une régulation de vitesse en fonction d'une position d'arrêt du véhicule autonome, il n'est pas acceptable que la vitesse du véhicule oscille autour de 0 m/s en atteignant le point d'arrêt, car de telles oscillations signifient que le véhicule avance et recule à son arrivée au point d'arrêt.

Autrement dit, la précision de position et de vitesse apportée par l'invention est très avantageuse dans le cas où l'on souhaite que le véhicule autonome s'arrête à un point précis (par exemple devant un panneau stop), mais une telle précision n'est pas requise pour un suivi de cible.

Au contraire, la régulation selon l'invention peut générer de l'inconfort si elle est appliquée à un profil de vitesse généré par le module de suivi de cible 4. En effet, un profil de vitesse généré par le module de suivi de cible peut présenter une dérivée discontinue, dont les discontinuités sont filtrées par l'application de filtres dont l'effet serait annulé par la mise en œuvre de l'invention. Autrement dit, si une régulation de vitesse selon l'invention était appliquée à un profil de vitesse généré par le module de suivi de cible, cela dégraderait le confort de suivi d'une cible, notamment la vitesse du véhicule serait saccadée.

La stratégie de commutation consiste donc à mettre en œuvre le régulateur de vitesse le plus adapté à la situation en cours, la situation pouvant être un suivi de cible ou un changement de vitesse à une position précise :

-    dans le cas d'un régulation de vitesse par rapport à un changement de vitesse à une position précise, la régulation de vitesse comprendra l'application de filtres correctifs (dans l'étape E3) en amont d'une boucle d'asservissement B1 entre la vitesse et l'accélération (mise en œuvre dans l'étape E4),
-    dans le cas d'une régulation de vitesse par rapport à un suivi de cible, la régulation de vitesse comprendra uniquement la boucle d'asservissement B1 entre la vitesse et l'accélération (mise en œuvre dans l'étape E4).

Par ailleurs, on traite également les situations où une cible apparait alors qu'une régulation de vitesse selon l'invention est en cours. Dans ce cas, une consigne de vitesse est déterminée par le module de suivi de cible 4 alors qu'une régulation de vitesse selon un profil de vitesse prédictif est en cours. Une stratégie d'arbitrage est alors appliquée ; elle consiste à déterminer la consigne de vitesse comme étant le minimum entre la deuxième consigne de vitesse CV2 issue du profil de vitesse prédictif et la troisième consigne de vitesse CV3 issue du module de suivi 4. Ainsi on s'assure dans tous les cas que la distance de suivi de cible est respectée ; dans les cas où la deuxième consigne de vitesse CV2 est inférieure à la consigne de vitesse de suivi de cible, on maintient la régulation de vitesse selon l'invention, c'est-à-dire la régulation de vitesse par rapport à un point de changement de vitesse.

Plus généralement, la stratégie d'arbitrage mise en œuvre dans l'invention consiste à déterminer la consigne de vitesse comme étant le minimum entre les différentes consignes de vitesses définies, la consigne CV4 issue de l'interface homme-machine 5, une éventuelle consigne CV3 issue du module de suivi de cible 4, et la consigne de vitesse CV2 issue du profil de vitesse prédictif. De cette manière, on s'assure que la consigne de vitesse appliquée au véhicule autonome ne dépasse par la vitesse définie par l'usager et permet de respecter une distance minimale de suivi d'une éventuelle cible.

**Revendications**

1.    Procédé de gestion de la vitesse longitudinale d'un véhicule automobile (100), le véhicule automobile circulant selon une trajectoire planifiée (T), le véhicule automobile étant équipé d'au moins un moyen de détection (1) de l'environnement du véhicule et d'un moyen d'odométrie (2), **caractérisé en ce qu'**il comprend

- une étape (E1) de détection, à partir des données issues de l'au moins un moyen de détection (1), d'un point de changement de vitesse (P), situé sur la trajectoire donnée (T) et à l'avant du véhicule automobile, et de détermination d'une vitesse limite (VL) applicable au point de changement de vitesse (P), puis
- une deuxième étape (E2) de calcul d'une première consigne de vitesse (CV1) du véhicule automobile (100), en fonction de la vitesse limite (VL) et d'une première distance (DT) séparant le véhicule automobile (100) du point de changement de vitesse (P), la première distance (DT) étant calculée en fonction d'un profil de vitesse planifié (PVP), la première distance (DT) présentant une marge d'erreur en distance (ΔD) par rapport à une deuxième distance (DM) déterminée par le moyen d'odométrie (2) entre le véhicule automobile (100) et le point de changement de vitesse (P), puis

- une troisième étape (E3) comprenant une détermination d'une deuxième consigne de vitesse (CV2) qui compense la marge d'erreur en distance (ΔD) générée dans la deuxième étape (E2) et qui anticipe un retard de phase (ΔT) généré dans une quatrième étape (E4) de commande du déplacement du véhicule automobile (100), puis

- une quatrième étape (E4) de commande du déplacement du véhicule automobile (100) selon la deuxième consigne de vitesse (CV2) pour atteindre le point de changement de vitesse (P) avec une vitesse égale à la vitesse limite (VL), la quatrième étape (E4) générant le retard de phase (ΔT) entre la réception de la deuxième consigne de vitesse (CV2) et le déplacement du véhicule selon la deuxième consigne de vitesse (CV2).

2. Procédé de gestion selon la revendication précédente, le véhicule automobile (100) étant équipé d'un moyen de mesure (3) de la vitesse instantanée du véhicule, **caractérisé en ce que** la quatrième étape (E4) comprend la détermination d'une consigne d'accélération (CA) du véhicule automobile comme étant la somme d'une première et d'une deuxième composante d'accélération (CA1, CA2),

   - la première composante d'accélération (CA1) étant calculée par l'application d'un filtre dérivateur du premier degré (F3) à la deuxième consigne de vitesse (CV2), et
   - la deuxième composante d'accélération (CA2) étant obtenue par application d'un premier régulateur proportionnel de gain ($K_V$) à la différence entre une vitesse instantanée (VM) du véhicule déterminée par le moyen de mesure de la vitesse (3) et une consigne de vitesse filtrée (CVF),

   la consigne de vitesse filtrée (CVF) étant obtenue par l'application successive d'un premier et d'un deuxième filtre du premier ordre (F41, F42) à la deuxième consigne de vitesse (CV2),

   - le premier filtre (F41) appliquant un retard de phase à la deuxième consigne de vitesse (CV2) de sorte à synchroniser la deuxième consigne de vitesse (CV2) avec la première composante d'accélération (CA1), et
   - le deuxième filtre (F42) étant paramétré de sorte que la consigne de vitesse filtrée (CVF) converge vers une valeur stable.

3. Procédé de gestion selon l'une des revendications précédentes, **caractérisé en ce que** la deuxième consigne de vitesse (CV2) est la somme d'une première et d'une deuxième composante de vitesse (CV21, CV22),

   - la première composante de vitesse (CV21) étant obtenue par application d'un premier et d'un deuxième filtre à avance de phase (F21, F22) à la première consigne de vitesse (CV1), et
   - la deuxième composante de vitesse (CV22) étant obtenue par application d'un deuxième régulateur proportionnel comprenant un gain donné ($K_D$) à la marge d'erreur en distance (ΔD), le gain donné étant réglé pour que la deuxième composante de vitesse (CV22) converge vers une valeur stable.

4. Procédé de gestion selon les revendications 2 et 3, **caractérisé en ce que** :

   - la même constante de temps ($\tau_{FF}$) est utilisée pour définir le premier filtre à avance de phase (F21) appliqué pour le calcul de la deuxième consigne de vitesse (CV2), le filtre dérivateur du premier degré (F3) et le premier filtre à retard de phase (F41) appliqués pour le calcul de la consigne d'accélération (CA), et **en ce que**
   - la même constante de temps ($\tau_{ModFF}$) est utilisée pour définir le deuxième filtre à avance de phase (F22) appliqué pour le calcul de la deuxième consigne de vitesse (CV2), ainsi que le deuxième filtre à retard de phase (F42) appliqué pour le calcul de la consigne d'accélération (CA).

5. Procédé de gestion selon l'une des revendications précédentes, le véhicule comprenant une interface homme machine (5) permettant à un usager de définir une quatrième consigne de vitesse (CV4), **caractérisé en ce que** la troisième étape (E3) comprend une modification de la deuxième consigne de vitesse (CV2) comme étant le minimum entre la deuxième consigne de vitesse (CV2) et la quatrième consigne de vitesse (CV4).

6. Procédé de gestion selon la revendication précédente, le véhicule comprenant un module de suivi de cible (4) déterminant une troisième consigne de vitesse (CV3), **caractérisé en ce que** la troisième étape (E3) comprend une modification de la deuxième consigne de vitesse (CV2) comme étant le minimum entre la deuxième consigne de vitesse (CV2), la troisième consigne de vitesse (CV3) et la quatrième consigne de vitesse (CV4).

7. Procédé de gestion selon l'une des revendications précédentes, **caractérisé en ce que** la vitesse limite (VL) est nulle.

8. Produit programme d'ordinateur comprenant des instructions de code de programme enregistrées sur un support lisible par ordinateur mettant en œuvre les étapes du procédé selon l'une quelconque des revendications 1 à 7 lorsque ledit programme fonctionne sur un ordinateur.

**Patentansprüche**

1. Verfahren zur Steuerung der Längsgeschwindigkeit eines Kraftfahrzeugs (100), wobei das Kraftfahrzeug entlang einer geplanten Trajektorie (T) fährt, wobei das Kraftfahrzeug mit mindestens einer Detektionseinrichtung (1) zur Detektion der Umgebung des Fahrzeugs und einer Odometrieeinrichtung (2) ausgestattet ist, **dadurch gekennzeichnet, dass** es umfasst

   - einen Schritt (E1) zur Detektion, ausgehend von Daten aus der mindestens einen Detektionseinrichtung (1), eines Schaltpunktes (P), der auf der gegebenen Trajektorie (T) und vor dem Kraftfahrzeug gelegen ist, und zur Bestimmung einer Grenzgeschwindigkeit (VL), die an dem Schaltpunkt (P) gilt, dann
   - einen zweiten Schritt (E2) zur Berechnung einer ersten Sollgeschwindigkeit (CV1) des Kraftfahrzeugs (100) in Abhängigkeit von der Grenzgeschwindigkeit (VL) und von einer ersten Distanz (DT) zwischen dem Kraftfahrzeug (100) und dem Schaltpunkt (P), wobei die erste Distanz (DT) in Abhängigkeit von einem geplanten Geschwindigkeitsprofil (PVP) berechnet wird, wobei die erste Distanz (DT) eine Distanz-Fehlermarge (ΔD) in Bezug auf eine von der Odometrieeinrichtung (2) bestimmte zweite Distanz (DM) zwischen dem Kraftfahrzeug (100) und dem Schaltpunkt (P) aufweist, dann
   - einen dritten Schritt (E3), umfassend eine Bestimmung einer zweiten Sollgeschwindigkeit (CV2), welche die in dem zweiten Schritt (E2) erzeugte Distanz-Fehlermarge (ΔD) ausgleicht und eine Phasenverzögerung (ΔT) antizipiert, die in einem vierten Schritt (E4) zur Steuerung der Bewegung des Kraftfahrzeugs (100) erzeugt wird, dann
   - einen vierten Schritt (E4) zur Steuerung der Bewegung des Kraftfahrzeugs (100) gemäß der zweiten Sollgeschwindigkeit (CV2), um den Schaltpunkt (P) mit einer Geschwindigkeit gleich der Grenzgeschwindigkeit (VL) zu erreichen, wobei der vierte Schritt (E4) die Phasenverzögerung (ΔT) zwischen dem Empfang der zweiten Sollgeschwindigkeit (CV2) und der Bewegung des Fahrzeugs gemäß der zweiten Sollgeschwindigkeit (CV2) erzeugt.

2. Verfahren zur Steuerung nach dem vorhergehenden Anspruch, wobei das Kraftfahrzeug (100) mit einer Messeinrichtung (3) für die momentane Geschwindigkeit des Fahrzeugs ausgestattet ist, **dadurch gekennzeichnet, dass** der vierte Schritt (E4) die Bestimmung einer Sollbeschleunigung (CA) des Kraftfahrzeugs als die Summe aus einer ersten und einer zweiten Beschleunigungskomponente (CA1, CA2) umfasst,

   - wobei die erste Beschleunigungskomponente (CA1) durch das Anwenden eines Ableitungsfilters ersten Grades (F3) auf die zweite Sollgeschwindigkeit (CV2) berechnet wird, und
   - wobei die zweite Beschleunigungskomponente (CA2) durch das Anwenden eines ersten proportionalen Verstärkungsreglers ($K_V$) auf die Differenz zwischen einer durch die Geschwindigkeitsmesseinrichtung (3) bestimmten momentanen Geschwindigkeit (VM) des Fahrzeugs und einer gefilterten Sollgeschwindigkeit (CVF) erhalten wird,

   wobei die gefilterte Sollgeschwindigkeit (CVF) durch das sukzessive Anwenden eines ersten und eines zweiten Filters erster Ordnung (F41, F42) auf die zweite Sollgeschwindigkeit (CV2) erhalten wird,

   - wobei der erste Filter (F41) eine Phasenverzögerung auf die zweite Sollgeschwindigkeit (CV2) anwendet, so dass die zweite Sollgeschwindigkeit (CV2) mit der ersten Beschleunigungskomponente (CA1) synchronisiert wird, und
   - wobei der zweite Filter (F42) so parametriert ist, dass die gefilterte Sollgeschwindigkeit (CVF) zu einem stabilen Wert hin konvergiert.

3. Verfahren zur Steuerung nach einem der vorhergehenden Ansprüche, **dadurch gekennzeichnet, dass** die zweite Sollgeschwindigkeit (CV2) die Summe aus einer ersten und einer zweiten Geschwindigkeitskomponente (CV21, CV22) ist,

**13**

- wobei die erste Geschwindigkeitskomponente (CV21) durch Anwenden eines ersten und eines zweiten Phasenvoreilungsfilters (F21, F22) auf die erste Sollgeschwindigkeit (CV1) erhalten wird, und
- wobei die zweite Geschwindigkeitskomponente (CV22) durch Anwenden eines zweiten proportionalen Reglers, der eine gegebene Verstärkung ($K_D$) umfasst, auf die Distanz-Fehlermarge ($\Delta D$) erhalten wird, wobei die gegebene Verstärkung so geregelt wird, dass die zweite Geschwindigkeitskomponente (CV22) zu einem stabilen Wert hin konvergiert.

4. Verfahren zur Steuerung nach den Ansprüchen 2 und 3, **dadurch gekennzeichnet, dass**:

- die gleiche Zeitkonstante ($\tau_{FF}$) verwendet wird, um den ersten Phasenvoreilungsfilter (F21), der zur Berechnung der zweiten Sollgeschwindigkeit (CV2) angewendet wird, den Ableitungsfilter ersten Grades (F3) und den ersten Phasenverzögerungsfilter (F41), die zur Berechnung der Sollbeschleunigung (CA) angewendet werden, zu definieren, und dass
- die gleiche Zeitkonstante ($\tau_{Modff}$) verwendet wird, um den zweiten Phasenvoreilungsfilter (F22), der zur Berechnung der zweiten Sollgeschwindigkeit (CV2) angewendet wird, sowie den zweiten Phasenverzögerungsfilter (F42), der zur Berechnung der Sollbeschleunigung (CA) angewendet wird, zu definieren.

5. Verfahren zur Steuerung nach einem der vorhergehenden Ansprüche, wobei das Fahrzeug eine Mensch-Maschine-Schnittstelle (5) umfasst, die es einem Benutzer ermöglicht, eine vierte Sollgeschwindigkeit (CV4) zu definieren, **dadurch gekennzeichnet, dass** der dritte Schritt (E3) ein Ändern der zweiten Sollgeschwindigkeit (CV2) als das Minimum zwischen der zweiten Sollgeschwindigkeit (CV2) und der vierten Sollgeschwindigkeit (CV4) umfasst.

6. Verfahren zur Steuerung nach dem vorhergehenden Anspruch, wobei das Fahrzeug ein Zielverfolgungsmodul (4) umfasst, das eine dritte Sollgeschwindigkeit (CV3) bestimmt, **dadurch gekennzeichnet, dass** der dritte Schritt (E3) ein Ändern der zweiten Sollgeschwindigkeit (CV2) als das Minimum zwischen der zweiten Sollgeschwindigkeit (CV2), der dritten Sollgeschwindigkeit (CV3) und der vierten Sollgeschwindigkeit (CV4) umfasst.

7. Verfahren zur Steuerung nach einem der vorhergehenden Ansprüche, **dadurch gekennzeichnet, dass** die Grenzgeschwindigkeit (VL) null ist.

8. Computerprogrammprodukt, das Programmcodeanweisungen umfasst, die auf einem computerlesbaren Medium gespeichert sind und die Schritte des Verfahrens nach einem der Ansprüche 1 bis 7 durchführen, wenn das Programm auf einem Computer läuft.

## Claims

1. Method for managing the longitudinal speed of a motor vehicle (100), the motor vehicle travelling on a planned trajectory (T), the motor vehicle being equipped with at least one detection means (1) for detecting the environment of the vehicle and with an odometry means (2), **characterized in that** it comprises

- a step (E1) of detecting, based on data from the at least one detection means (1), a speed change point (P) located on the given trajectory (T) and ahead of the motor vehicle, and of determining a limit speed (VL) applicable at the speed change point (P), and then
- a second step (E2) of computing a first speed setpoint (CV1) for the motor vehicle (100), as a function of the limit speed (VL) and of a first distance (DT) separating the motor vehicle (100) from the speed change point (P), the first distance (DT) being computed as a function of a planned speed profile (PVP), the first distance (DT) having a distance margin of error ($\Delta D$) with respect to a second distance (DM) determined by the odometry means (2) between the motor vehicle (100) and the speed change point (P), and then
- a third step (E3) comprising determining a second speed setpoint (CV2) that compensates for the distance margin of error ($\Delta D$) generated in the second step (E2) and that anticipates a phase delay ($\Delta T$) generated in a fourth step (E4) of controlling the movement of the motor vehicle (100), and then
- a fourth step (E4) of controlling the movement of the motor vehicle (100) in accordance with the second speed setpoint (CV2) so as to reach the speed change point (P) with a speed equal to the limit speed (VL), the fourth step (E4) generating the phase delay ($\Delta T$) between the reception of the second speed setpoint (CV2) and the movement of the vehicle in accordance with the second speed setpoint (CV2).

2. Management method according to the preceding claim, the motor vehicle (100) being equipped with a measuring means (3) for measuring the instantaneous speed of the vehicle, **characterized in that** the fourth step (E4) comprises determining an acceleration setpoint (CA) for the motor vehicle as being the sum of a first and a second acceleration component (CA1, CA2),

- the first acceleration component (CA1) being computed by applying a first-degree differential filter (F3) to the second speed setpoint (CV2), and
- the second acceleration component (CA2) being obtained by applying a first proportional gain controller ($K_V$) to the difference between an instantaneous speed (VM) of the vehicle determined by the speed measuring means (3) and a filtered speed setpoint (CVF),

the filtered speed setpoint (CVF) being obtained by successively applying a first and a second first-order filter (F41, F42) to the second speed setpoint (CV2),

- the first filter (F41) applying a phase delay to the second speed setpoint (CV2) so as to synchronize the second speed setpoint (CV2) with the first acceleration component (CA1), and
- the second filter (F42) being parameterized such that the filtered speed setpoint (CVF) converges on a stable value.

3. Management method according to either of the preceding claims, **characterized in that** the second speed setpoint (CV2) is the sum of a first and a second speed component (CV21, CV22),

- the first speed component (CV21) being obtained by applying a first and a second phase advance filter (F21, F22) to the first speed setpoint (CV1), and
- the second speed component (CV22) being obtained by applying a second proportional controller comprising a given gain ($K_D$) to the distance margin of error ($\Delta$D), the given gain being regulated so that the second speed component (CV22) converges on a stable value.

4. Management method according to Claims 2 and 3, **characterized in that**:

- the same time constant ($\tau_{FF}$) is used to define the first phase advance filter (F21) applied to compute the second speed setpoint (CV2), the first-degree differential filter (F3) and the first phase delay filter (F41) applied to compute the acceleration setpoint (CA), and **in that**
- the same time constant ($\tau_{ModFF}$) is used to define the second phase advance filter (F22) applied to compute the second speed setpoint (CV2), and the second phase delay filter (F42) applied to compute the acceleration setpoint (CA).

5. Management method according to one of the preceding claims, the vehicle comprising a human-machine interface (5) allowing a user to define a fourth speed setpoint (CV4), **characterized in that** the third step (E3) comprises modifying the second speed setpoint (CV2) as being the minimum out of the second speed setpoint (CV2) and the fourth speed setpoint (CV4).

6. Management method according to the preceding claim, the vehicle comprising a target following module (4) that determines a third speed setpoint (CV3), **characterized in that** the third step (E3) comprises modifying the second speed setpoint (CV2) as being the minimum out of the second speed setpoint (CV2), the third speed setpoint (CV3) and the fourth speed setpoint (CV4).

7. Management method according to one of the preceding claims, **characterized in that** the limit speed (VL) is zero.

8. Computer program product comprising program code instructions recorded on a computer-readable medium implementing the steps of the method according to any one of Claims 1 to 7 when said program runs on a computer.

Fig. 1

Fig. 2

Fig. 3

Fig. 4

**EP 4 540 118 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1913267
- US 8924049 B2

- US 2016121898 A1